# EUROPÄISCHE PATENTSCHRIFT

(11) **EP 1 075 640 B1**
(45) Veröffentlichungstag und Bekanntmachung des Hinweises auf die Patenterteilung: **04.09.2002**
(21) Anmeldenummer: 99932422.1
(22) Anmeldetag: 27.01.1999
(51) Int. Cl.: F42D 3/00, F42B 3/00, B60J 9/00, E05D 11/00

(54) **NOTAUSSTIEG FÜR SICHERHEITSFAHRZEUGE**
EMERGENCY EXIT FOR SAFETY MOTOR VEHICLES
ISSUE DE SECOURS POUR VEHICULES DE SECURITE

(30) Priorität: 29.01.1998 DE 19803440
(43) Veröffentlichungstag der Anmeldung: 14.02.2001
(73) Patentinhaber: Sachsenring Entwicklungsgesellschaft mbH, 08058 Zwickau (DE)
(72) Erfinder: Ackermann, Jörg, 72124 Pliezhausen (DE)
(74) Vertreter: Rumrich, Gabriele
(86) Internationale Anmeldenummer: DE9900250
(87) Internationale Veröffentlichungsnummer: WO99039156

(56) Entgegenhaltungen:
- EP-A- 0 433 940
- DE-A- 19 709 316
- US-A- 4 978 089
- US-A- 5 727 288
- PATENT ABSTRACTS OF JAPAN vol. 014, no. 186 (M-0962), 16. April 1990 & JP 02 034452 A (MITSUBISHI MOTORS CORP), 5. Februar 1990

## Beschreibung

Die Erfindung betrifft einen Notausstieg für Sicherheitsfahrzeuge nach dem Oberbegriff des ersten und siebten Patentanspruchs.

Bei Sicherheitsfahrzeugen in Form von gepanzerten Kraftfahrzeugen besteht die Gefahr, daß sich nach einem Unfall oder nach einer Deformierung des Fahrzeuges durch gewalttätige Einwirkungen die Türen nicht öffnen lassen und dadurch die Insassen das Kraftfahrzeug nicht verlassen können.

Aus EP 0 433 940 B1 ist ein Notausstieg für Kraftfahrzeuge bekannt, bei welchem ein Sprengelement in dem Scharnierstift des Türscharnieres oder in einem Gewindebolzen zur Befestigung des Türscharniers am Fahrzeugrahmen oder an der Fahrzeugtür vorgesehen ist. Bei Anordnung des Sprengelementes im Scharnierstift ist nicht gewährleistet, daß eine zuverlässige Trennung der beiden Scharnierflügel erfolgt, da sich Teile des zerstörten Scharnierstiftes zwischen diesen verklemmen können. Ein weiteres Problem besteht in der Zuführung der Zuleitung zum im Scharnierstift in einer Hülse angeordneten Sprengelement, denn die Hülse sitzt wiederum in einer Scharnierhülse, wodurch in der Hülse und der Scharnierhülse genau fluchtende Durchbrüche zum Zuführen der Zuleitung angeordnet sein müssen. Bei nur geringem Verdrehen der beiden Hülsen zueinander kann die Zuleitung beschädigt werden, wodurch eine sichere Zündung des Sprengelementes nicht mehr gewährleistet wird.

Bei Anordnung des Sprengelementes im Gewindebolzen erfolgt die Zuführung der Zuleitung zum Sprengelement durch den Kopf des Gewindebolzens, womit ein sicheres Anziehen des Gewindebolzens nicht mehr erfolgen kann. Die Kabelführung der Zuleitung erfolgt nachteiliger Weise freiliegend über den Fahrgastraum, wodurch es einerseits zu einer unbeabsichtigten Sprengung kommen kann und andererseits durch eine Beschädigungen der Zuleitung eine zuverlässige Zündung nicht gegeben ist.

Weiterhin besteht bei beiden vorgenannt dargestellten Varianten ein entscheidender Nachteil darin, daß bei einer schwankenden Bordspannung Zündungsausfälle auftreten können. Eine Zündung des Sprengelementes ist ebenfalls nicht möglich, wenn die Bordspannung ausgefallen ist.

Bei einem Notausstieg für Kraftfahrzeuge gemäß EPO Patent Abstracts of Japan 02034452 ist im Bereich des Türscharnieres ein Sprengmittel vorgesehen, das durch ein nicht näher beschriebenes auslösendes Steuermittel zur Explosion gebracht werden kann, wodurch ein dünnes Teil der Säule zerstört wird und die Tür abfällt.

Ein pyrotechnisches System für einen Notausgang in einem Flugzeug gemäß US 4,978,089 weist ein Zündmittel auf, das beispielsweise einen Schlagbolzen enthält, der in der Lage ist, ein im Notausgangsbereich umlaufendes Sprengmittel zu aktivieren. Dem Zündmittel sind manometrische Sicherheitsmittel und Steuermittel zugeordnet, die im ersten Fall ein Zünden verhindern können und im zweiten Fall beispielsweise ein internes und ein externes Betätigungselement umfassen.

Bei einer Einrichtung zum Abtrennen von Türen vom Kraftfahrzeugkörper gemäß US 5,727,288 sind lediglich eine Spannungsquelle und ein Schalter vorgesehen, um ein im Scharnierbolzen aufgenommenes Sprengmittel zu zünden.

Der Erfindung liegt die Aufgabe zu Grunde, einen Notausstieg für Sicherheitsfahrzeuge zu schaffen, der durch sichere Zündung und zuverlässige Trennung des Scharniers die Zuverlässigkeit des Notausstiegs verbessert.

Diese Aufgabe wird erfindungsgemäß mit den Merkmalen des ersten und siebten Patentanspruchs gelöst. Vorteilhafte Ausbildungen ergeben sich aus den Unteransprüchen.

Der Notausstieg weist dabei bekannter Weise ein Sprengelement zum Einbau an einen Schließmechanismus einer Fahrzeugtür auf, wobei das Sprengelement an einer zwischen einem Türscharnier und der Fahrzeugtür vorgesehenen Trennstelle und in einem das Scharnier mit dem Fahrzeugrahmen oder der Tür verbindenden Gewindebolzen angeordnet ist. Dem Sprengelement wird über eine Zuleitung die zur Zündung erforderliche Spannung zur Verfügung gestellt. Erfindungsgemäß wird zur Gewährleistung der zuverlässigen Zündung des Sprengelementes diesem über ein Steuergerät eine definierte Zündspannung bereitgestellt. Dazu wird mit dem Steuergerät entweder aus der Bordspannung oder bei Ausfall der Bordspannung über eine von der Bordspannung unabhängige Batterie eine definierte Zündspannung erzeugt. Vorteilhafter Weise erfolgt beim Anlassen des Fahrzeuges über das Steuergerät ein Funktionstest, mit welchem die Funktionstüchtigkeit signalisiert wird. Die Signalisierung erfolgt vorzugsweise über eine entsprechende Signalleuchte am Armaturenbrett, es ist jedoch auch möglich, durch einen Signalton die störungsfreie Einsatzbereitschaft oder Störungen anzuzeigen. Treten nach dem Einschalten der Zündung Fehler auf, werden diese ebenfalls z.B. über eine LED oder ein akustisches Signal angezeigt. Bei einem Unfall des Fahrzeuges erfolgt die Aktivierung und Deaktivierung über einen entsprechenden Schalter der vorzugsweise als Schlüsselschalter ausgebildet ist, wobei wiederum der jeweilige Statuszustand über ein optisches und/oder akustisches Signal angezeigt wird.

Nach der Aktivierung des Sprengsystems kann durch Betätigen eines Einsatzschalters die Türabsprengung freigegeben werden und durch den jeweiligen Türinnenöffner oder einen anderen Schalter die Zündung des Sprengelementes erfolgen. Der Gewindebolzen ist erfindungsgemäß als ein durch das Scharnier und den Fahrzeugrahmen hindurch reichender Gewindebolzen ausgebildet. Die Zuleitung zum Sprengelement erfolgt vorteilhafter Weise über das dem Bolzenkopf gegenüberliegende Ende des Gewindebolzens, wobei die Zuleitungen durch die Säule des Kraftfahrzeuges oder das Türinnenteil geführt wird und somit vor Beschädigungen geschützt sind. Weiterhin ist an der dem Türscharnier gegenüberliegenden Seite eine Gewindeplatte angeordnet, in welche die Gewindebolzen hinein oder hindurch reichen.

Zur Absicherung einer zuverlässigen Trennung an der Trennstelle wird ein oder beidseitig zur Trennstelle ein Federenergie speicherndes Element angeordnet, das bei Auslösen der Sprengung und Bruch des Gewindebolzens seine Energie freigibt und die zu trennenden Teile auseinander drückt, so daß das Scharnier sicher von der Trennstelle weggeklappt wird. Das energiespeichernde Element ist je nach Anordnung der Gewindebolzen zwischen dem Scharnier und der Tür oder dem Rahmen und/oder unter dem Kopf des Gewindebolzens und/oder zwischen Gewindeplatte und Rahmen bzw. Tür angeordnet. Das energiespeichernde Element ist vorzugsweise als Druckfeder ausgebildet und auf dem Außendurchmesser des Bolzenschaftes angeordnet. Bei Trennung des Bolzens in Querrichtung durch das Auslösen des Sprengelementes wird der Bolzenkopf mit dem sich daran befindlichen abgetrennten einen Teil des Bolzenschaftes und/oder der andere Teil des Bolzenschaftes durch die sich entspannende Druckfeder aus dem Bereich der Trennstelle entfernt, wodurch ein sicheres Trennen zwischen Scharnier und Fahrzeugtür bzw. zwischen Scharnier und Rahmen erfolgen kann, da das Scharnier vom Rahmen bzw. der Fahrzeugtür weggeklappt wird.

Die Erfindung wird nachfolgend anhand von Ausführungsbeispielen und zugehörigen Zeichnungen näher erläutert.
Es zeigen:
- Fig. 1:: An der Fahrzeugtür 1 und dem Rahmen 6 befestigtes Scharnier 2
- Fig. 2:: Darstellung der Gewindebolzen mit Druckfedern zwischen Scharnier und Fahrzeugtür bzw. Rahmen
- Fig. 3:: Druckfedern zwischen Bolzenkopf und Scharnier und Scharnier und Gewindeplatte

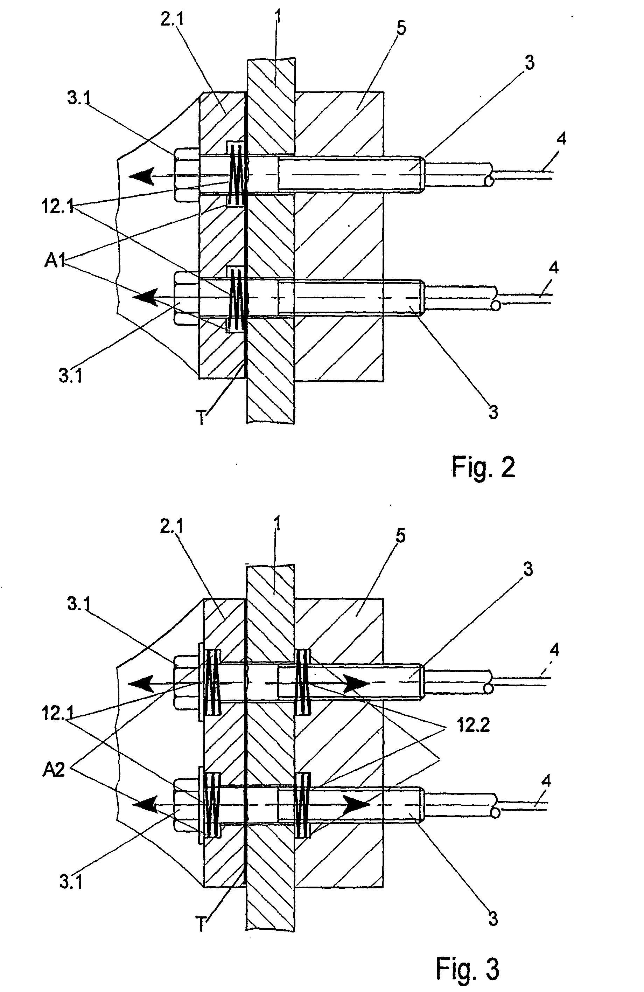

- Fig. 3:: Prinzipdarstellung der Steuerschaltung

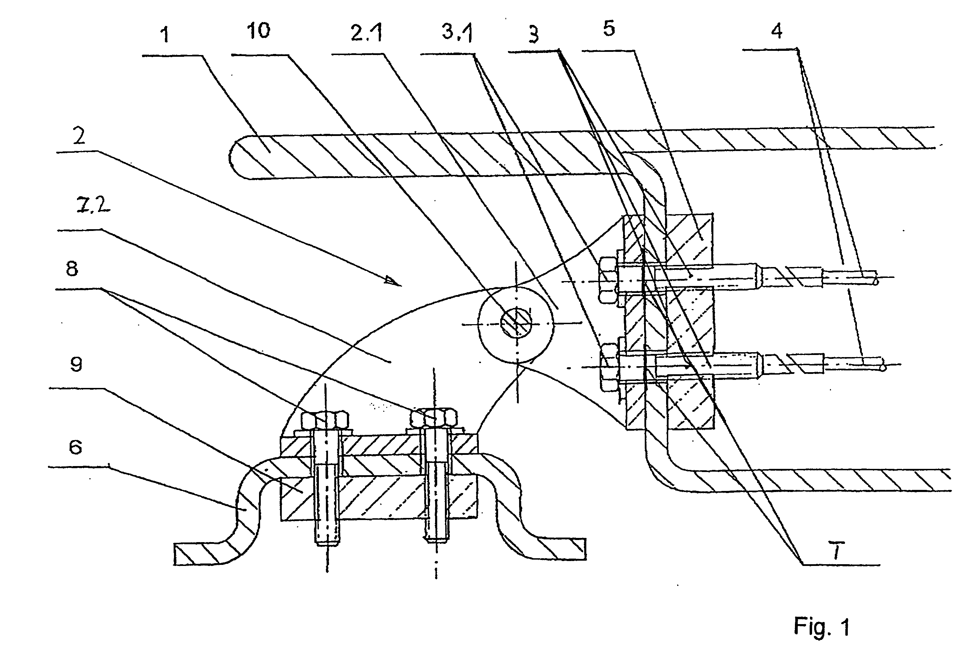

In Fig. 1 ist ein Teil der Fahrzeugtür 1 dargestellt, an der das Scharnier 2 mit seinem Scharnierflügel 2.1 über zwei Gewindebolzen 3 befestigt ist. In den Gewindebolzen 3 befinden sich nicht dargestellte Sprengelemente, die über Zuleitungen 4 an eine nicht dargestellte Spannungsquelle angeschlossen sind. Die Zuleitungen 4 führen dabei über das dem Bolzenkopf 3.1 abgewandte Ende des Gewindebolzens 8 zum Sprengelement. An der Rückseite der Fahrzeugtür 1 befindet sich eine Gewindeplatte 5, in welche die Gewindebolzen 3 eingeschraubt sind. Anstelle der Gewindeplatte 5 können beispielsweise auch Kontermuttern vorgesehen werden. Die Gewindebolzen 3 verspannen mit den Bolzenköpfen 3.1 den Scharnierflügel 2.1 beim Anziehen gegen die Fahrzeugtür 1 und die Gewindeplatte 5. Der andere Scharnierflügel 2.2 ist mit dem Rahmen 6 des Kraftfahrzeuges (in diesem Fall mit der Säule) über zwei Schrauben 8 verbunden, die ebenfalls in eine Gewindeplatte 9 eingeschraubt werden. Beide Scharnierflügel 2.1 und 2.2 des Scharniers 2 sind über einen Stift 10 zueinander schwenkbar gelagert.

Zwischen dem Scharnierflügel 2.1 und der Fahrzeugtür 1 befindet sich die Trennstelle T, so daß bei Zündung des Sprengelementes der Gewindebolzen 8 in Querrichtung bricht und damit die Verbindung zwischen Scharnier 2 und Fahrzeugtür 1 im Bereich der Trennstelle T unterbrochen und die Fahrzeugtür freigegeben wird.

Um ein zuverlässiges Entfernen der Gewindebolzen 3 aus der Trennstelle T zu gewährleisten ist es vorteilhaft, jeweils zwischen dem Scharnierflügel 2.1 und der Fahrzeugtür 1 eine Druckfeder 12.1 anzuordnen. Im dargestellten Beispiel gem. Fig. 2 ist an jedem Gewindebolzen 3 auf dessen Außendurchmesser eine Druckfeder 12.1 gelagert. Die Federn 12.1 sitzen in Aussparungen A1 des Scharnierflügels 2.1. Bei Brechen des Gewindebolzens in Querrichtung entspannen sich die Druckfedern und klappen den Scharnierflügel 2.1 des Scharniers 2 von der Trennstelle T zuverlässig weg. Bedarfsweise kann die Druckfeder 12.1 auch zwischen dem Kopf 3.1 des Gewindebolzens 3 und dem Scharnier 2 und ggf. zusätzlich eine Druckfeder 12.2 zwischen Gewindeplatte 5 und Fahrzeugtür 1 bzw. Rahmen 6 angeordnet sein (s. Fig. 3). In diesem Fall entspannen sich bei Brechen des Gewindebolzens die vorgespannten Druckfedern 12.1 und 12.2 und die sich im Bereich der Trennstelle T befindlichen Teile der gebrochenen Gewindebolzen 3 werden zuverlässig in Pfeilrichtung aus der Trennstelle T entfernt. Auch bei dieser Ausführungsform sind die Druckfedern 12.1 und 12.2 als Schraubenfedern ausgebildet und auf dem Schaft der Gewindebolzen 3 gelagert. Jede Feder 12.1 ist in einer entsprechenden Aussparung A2 des Scharnierflügels 2.1 und jede Feder 12.2 in einer Aussparung A3 der Gewindeplatte 5 angeordnet.

Neben der in Fig. 2 dargestellten Ausführungsform kann es auch genügen, jeweils nur eine Druckfeder 12.1 oder 12.2 vorzusehen.

Diese vorgenannt beschriebenen Ausführungsformen können analog auch für die Verbindung zwischen Scharnierflügel 2.2 und Rahmen 6 Anwendung finden.

Weiterhin ist es möglich, die Gewindeplatte 5 an die Fahrzeugtür 1 bzw. den Rahmen 6 anzuschweißen oder mehr als zwei Bolzen 3 vorzusehen.

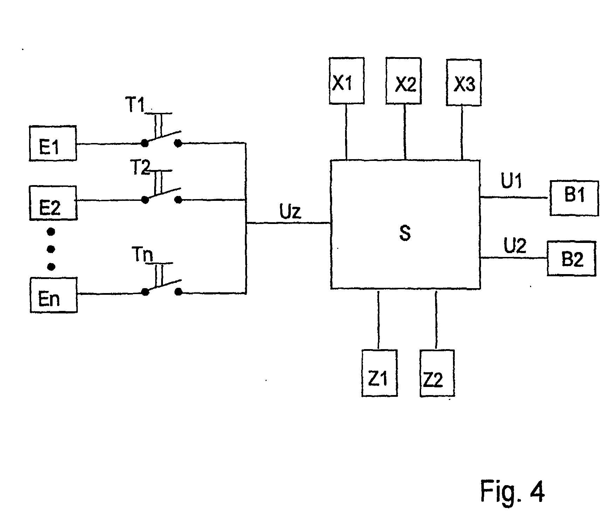

In Fig. 4 ist eine Prinzipdarstellung der Einbindung des Steuergerätes S in das Fahrzeugsystem dargestellt. Das Steuergerät S ist zum einen mit der Bordspannung (Batterie B1) als auch mit einer von der Bordspannung unabhängigen Batterie B2 und zum anderen mit den Sprengelementen E1, E2 bis En verbunden. Fällt die Bordspannung aus, wird automatisch durch das Steuergerät S auf Stromversorgung über die Batterie B2 umgeschalten. Die jeweils durch die Batterie B1 bereitgestellte Bordspannung U1 und die durch die Batterie B2 bereitgestellte Spannung U2 werden durch das Steuergerät S so korrigiert, daß den schematisch dargestellten Sprengelementen E1, E2 bis En eine definierte Zündspannung UZ zur Verfügung gestellt wird.

Beim Anlassen des Fahrzeuges erfolgt über das Steuergerät S ein Funktionstest, wobei die Funktionstüchtigkeit und/oder auftretende Fehler optisch und/oder akustisch über ein dem Steuergerät S zugeordnetes Signalelement X1 signalisiert werden. Weitere nach dem Einschalten der Zündung auftretende Störungen werden optisch und/oder akustisch über ein weiteres dem Steuergerät S zugeordnetes Signalelement X2 angezeigt.

Die Aktivierung und Deaktivierung erfolgt über einen Schalter Z1, wobei der jeweilige Statuszustand über ein optisches und/oder akustisches Signalelement X3 angezeigt wird.

Durch Drücken eines Einsatzschalters Z2 wird die Türabsprengung freigegeben und anschließend durch Betätigung des jeweiligen Türinnenöffners T1, T2, bis Tn oder eines dazu vorgesehenen anderen Schalters die entsprechenden Sprengelemente E1, E2 bis En der jeweiligen Fahrzeugtür gezündet.

Zum Auslösen der Sprengung durch Betätigung des Türinnenöffners ist zwischen Fahrzeugtür und Türinnenöffner ein Schaltelement angeordnet, welches bei Bewegung des Türinnenöffners das Zündsignal auslöst. Dieses Schaltelement kann beispielsweise ein Näherungsschalter in Form eines Reed-Kontaktes sein.

Durch das Bereitstellen einer definierten Zündspannung auch bei Ausfall der Bordspannung wird im Bedarfsfall eine zuverlässige Zündung der Sprengelemente gewährleistet.

## Patentansprüche

1. Notausstieg für Sicherheitskraftfahrzeuge mit einem Sprengelement (E1, E2 bis En) zum Einbau an einen Schließmechanismus einer Fahrzeugtür (1), wobei sich das Sprengelement (E1, E2 bis En) an einer zwischen einem Türscharnier (2) und der Fahrzeugtür (1) vorgesehenen Trennstelle (T) befindet und in einem das Scharnier (2) mit den Fahrzeugrahmen (6) oder der Fahrzeugtür (1) verbindenden Gewindebolzen (3) angeordnet ist und dem Sprengelement (E1, E2 bis En) über eine Zuleitung (4) die zur Zündung erforderliche Zündspannung (U_{z}) zur Verfügung gestellt wird, **dadurch gekennzeichnet, daß** über ein Steuergerät (S) eine genau definierte und die zuverlässigen Zündung des Sprengelementes (E1, E2 bis En) gewährleistende Zündspannung (U_{z}) bereitgestellt wird.

2. Notausstieg nach Anspruch 1, **dadurch gekennzeichnet, daß** die zur Zündung des Sprengelementes (E1, E2 bis En) erforderliche definierte Zündspannung (UZ) aus der mit einer Batterie (B1) erzeugte Bordspannung (U₁) und bei Ausfall der Bordspannung aus einer über eine vom Bordnetz unabhängige Batterie (B2) bereitgestellten Spannung (U2) mit dem Steuergerät (S) erzeugt wird.

3. Notausstieg nach Anspruch 1 und 2, **dadurch gekennzeichnet, daß** beim Anlassen des Fahrzeuges über das Steuergerät (S) ein Funktionstest erfolgt, wobei die Funktionstüchtigkeit und/oder auftretende Fehler über optische und/oder akustische Signalelemente (X1) angezeigt werden.

4. Notausstieg nach einem der Ansprüche 1 bis 3, **dadurch gekennzeichnet, daß** nach den Einschalten der Zündung auftretende Störungen über optische und/oder akustische Signalelemente (X2) angezeigt werden.

5. Notausstieg nach einem der Ansprüche 1 bis 4, **dadurch gekennzeichnet, daß** die Aktivierung und Deaktivierung über einen Schalter (Z1) erfolgt, wobei der jeweilige Statuszustand über ein optisches und/oder akustisches Signalelement (X3) angezeigt wird.

6. Notausstieg nach Anspruch 5, **dadurch gekennzeichnet, daß** der zur Aktivierung und Deaktivierung dienende Schalter (Z1) als Schlüsselschalter ausgebildet ist.

7. Notausstieg nach einem der Ansprüche 1 bis 6, **dadurch gekennzeichnet, daß** durch Drücken eines Einsatzschalters (Z2) die Türabsprengung freigegeben wird und anschließend durch Betätigung des jeweiligen Türinnenöffners (T1, T2 bis Tn) oder ein anderes Schaltelement die Zündung des Sprengelementes (E1, E2 bis En) erfolgt.

8. Notausstieg für Sicherheitskraftfahrzeuge mit einem Sprengelement (E1, E2 bis En) zum Einbau an einen Schließmechanismus einer Fahrzeugtür (1), wobei sich das Sprengelement (E1, E2 bis En) an einer zwischen einem Türscharnier (2) und der Fahrzeugtür (1) vorgesehenen Trennstelle (T) befindet und in einem das Scharnier (2) mit den Fahrzeugrahmen (6) oder der Fahrzeugtür (1) verbindenden Gewindebolzen (3) angeordnet ist und dem Sprengelement (E1, E2 bis En) über eine Zuleitung (4) die zur Zündung erforderliche Zündspannung (U_{z}) zur Verfügung gestellt wird, **dadurch gekennzeichnet, daß** ein oder beidseitig zur oder in der Trennstelle mindestens ein energiespeicherndes Element angeordnet ist, das bei Auslösen der Sprengung und Bruch des Gewindebolzens (8) seine Energie freigibt und die zu trennenden Teile auseinander drückt.

9. Notausstieg nach Anspruch 8, **dadurch gekennzeichnet, daß** das energiespeichernde Element
- zwischen dem Scharnier (2) und der Fahrzeugtür (1)
- oder zwischen dem Scharnier (2) und dem Rahmen (6)
- und/oder zwischen der Gewindeplatte und dem Rahmen (6) oder der Fahrzeugtür (1)
- und/oder zwischen dem Bolzenkopf (3.1) und dem Scharnier (2)
angeordnet ist.

10. Notausstieg nach Anspruch 8 und 9, **dadurch gekennzeichnet, daß** das energiespeichernde Element als Druckfeder (12.1, 12.2) ausgebildet ist.

11. Notausstieg nach einem der Ansprüche 8 bis 10, **dadurch gekennzeichnet, daß** der Gewindebolzen (3) als durch das Scharnier (2) und den Fahrzeugrahmen (6) oder die Fahrzeugtür (1) hindurchreicht, wobei die Zuleitung (4) zum Sprengelement (E1, E2 bis En) über das dem Bolzenkopf (3.1) gegenüberliegende Ende des Gewindebolzens (3) erfolgt.

12. Notausstieg nach einem der Ansprüche 8 bis 11, **dadurch gekennzeichnet, daß** die Verbindung zwischen dem Türscharnier (2) und dem Fahrzeugrahmen (6) und/oder der Fahrzeugtür (1) über zwei oder mehr mit Sprengelementen (E1, E2 bis En) versehene Gewindebolzen (3) erfolgt.

## Claims

1. An emergency exit for security vehicles with a blasting element (E1, E2 through En) for installation in a locking mechanism of a vehicle door (1), with the blasting element (E1, E2 through En) being located at separating place (T) between a door hinge (2) and the vehicle door (1) and being disposed in a threaded bolt (3) connecting the hinge (2) with the chassis frame (6) or the vehicle door (1) and the blasting element (E1, E2 through En) being provided with the detonation voltage (U_{z}) required for the detonation via a feed line (4), **characterized in that** a detonation voltage (U_{z}) ensuring a precisely defined and reliable detonation of a blasting element (E1, E2 through En) is provided through a control device (S).

2. An emergency exit as claimed in claim 1, **characterized in that** the detonation voltage (U_{z}) required for detonating the blasting element (E1, E2 through En) is produced from the onboard voltage (U₁) generated by a battery (B1) and, in the case of a failure of the onboard voltage, with the control device (S) from a voltage provided by a battery (B2) which is independent of the onboard electrical system.

3. An emergency exit as claimed in claim 1 and 2, **characterized in that** on starting the vehicle a function test is performed by the control device (S), with the functionality and/or occurring faults being displayed by way of visual and/or acoustic signaling elements (X1).

4. An emergency exit as claimed in one of the claims 1 to 3, **characterized in that** any malfunctions occurring after the activation of the detonation are displayed by way of visual and/or acoustic signaling elements (X2).

5. An emergency exit as claimed in one of the claims 1 to 4, **characterized in that** the activation and deactivation is performed through a switch (Z1), with the respective status being displayed by way of a visual and/or acoustic signaling element (X3).

6. An emergency exit as claimed in claim 5, **characterized in that** the switch (Z1) used for activation or deactivation is arranged as a key switch.

7. An emergency exit as claimed in one of the claims 1 to 6, **characterized in that** by pressing an activation switch (Z2) the door blasting is released and thereafter the detonation of the blasting element (E1, E2 through En) is performed by actuating the respective inside door opener (T1, T2 through Tn) or any other switching element.

8. An emergency exit for security vehicles with a blasting element (E1, E2 through En) for installation in a locking mechanism of a vehicle door (1), with the blasting element (E1, E2 through En) being located at separating place (T) between a door hinge (2) and the vehicle door (1) and being disposed in a threaded bolt (3) connecting the hinge (2) with the chassis frame (6) or the vehicle door (1) and with the blasting element (E1, E2 through En) being provided with the detonation voltage (U_{z}) required for the detonation via a feed line (4), **characterized in that** at least one energy-storing element is disposed on one or either side of or in the separating place, which energy-storing element releases its energy on initiating the detonation or in the case of breakage of the threaded bolt (8) and presses the parts to be separated apart.

9. An emergency exit as claimed in claim 8, **characterized in that** the energy-storing element is disposed
- between the hinge (2) and the vehicle door (1)
- or between the hinge (2) and the chassis frame (6)
- and/or between the threaded plate and the chassis frame (6) or the vehicle door (1)
- and/or between the bolt head (3.1) and the hinge (2).

10. An emergency exit as claimed in claim 8 or 9, **characterized in that** the energy-storing element is arranged as a compression (12.1, 12.2).

11. An emergency exist as claimed in one of the claims 8 to 10, **characterized in that** the threaded bolt (3) reaches through the hinge (2) and the chassis frame (6) or the vehicle door (1), with the feed line (4) to the blasting element (E1, E2 through En) being provided via the end of the threaded bolt (3) which is opposite of the bolt head (3.1).

12. An emergency exit as claimed in one of the claims 8 to 11, **characterized in that** the connection between the door hinge (2) and the chassis frame (6) and/or the vehicle door (1) is made via two or more threaded bolts (3) provided with blasting elements (E1, E2 through En).

## Revendications

1. Issue de secours pour véhicules de sécurité avec un élément explosif (E1, E2 à En) destiné à être monté à un mécanisme de fermeture d'une porte de véhicule (1), l'élément explosif (E1, E2 à En) étant situé à un point de sectionnement (T) prévu entre une charnière de porte (2) et la porte du véhicule (1) et étant disposé dans un boulon fileté (3) reliant la charnière (2) au châssis (6) du véhicule ou à la porte de véhicule (1), la tension d'allumage (U₂) nécessaire à l'allumage étant fournie à l'élément explosif (E1, E2 à En) par une conduite d'amenée (4), **caractérisée en ce qu'**une tension d'allumage (U₂) définie avec précision et assurant l'allumage certain de l'élément explosif (E1, E2 à En) est fournie par un appareil de commande (S).

2. Issue de secours selon la revendication 1, **caractérisée en ce que** la tension d'allumage (UZ) définie nécessaire à l'allumage de l'élément explosif (E1, E2 à En) est obtenue à l'aide de l'appareil de commande (S) à partir de la tension de bord (U₁) produite par une batterie (B1) et, en cas de coupure de la tension de bord, à partir d'une tension (U2) fournie par une batterie (B2) indépendante du réseau de bord.

3. Issue de secours selon les revendications 1 et 2, **caractérisée en ce que**, lors du démarrage du véhicule, l'appareil de commande (S) effectue un test fonctionnel qui indique, par des éléments de signal optique et/ou acoustique (X1), l'aptitude au fonctionnement et/ou les défauts survenus.

4. Issue de secours selon l'une des revendications 1 à 3, **caractérisée en ce, que**, après avoir mis le contact, un dysfonctionnement survenu est indiqué par des éléments de signal optique et/ou acoustique (X2).

5. Issue de secours selon l'une des revendications 1 à 4, **caractérisée en ce que** l'activation et la désactivation est commandée par un commutateur (Z1), l'état d'activation ou de désactivation étant indiqué par un élément de signal optique et/ou acoustique (X3).

6. Issue de secours selon la revendication 5, **caractérisée en ce que** le commutateur (Z1) d'activation et de désactivation est réalisé sous forme de commutateur à clé.

7. Issue de secours selon l'une des revendications 1 à 6, **caractérisée en ce que** le processus de sautage de la porte est libéré par l'actionnement d'un commutateur de déclenchement (Z2), l'élément explosif (E1, E2 à En) étant ensuite mis à feu en manoeuvrant l'actionneur intérieur respectif pour l'ouverture de la porte (T1, T2 à Tn) ou un autre élément de commutation.

8. Issue de secours pour véhicules de sécurité avec un élément explosif (E1, E2 à En) destiné à être monté à un mécanisme de fermeture d'une porte de véhicule (1), l'élément explosif (E1, E2 à En) étant situé à un point de sectionnement (T) prévu entre une charnière de porte (2) et la porte du véhicule (1) et étant disposé dans un boulon fileté (3) reliant la charnière (2) au châssis (6) du véhicule ou à la porte (1) du véhicule, la tension d'allumage (U₂) nécessaire à l'allumage étant fournie à l'élément explosif (E1, E2 à En) par une conduite d'amenée (4), **caractérisé en ce qu'**un élément accumulateur d'énergie est disposé sur un ou sur les deux côtés du point de sectionnement ou bien dans celui-ci, ledit élément accumulateur d'énergie libérant son énergie au moment de l'explosion et de la fracture du boulon fileté (8), écartant ainsi par la force les parties à sectionner.

9. Issue de secours selon la revendication 8, **caractérisée en ce que** l'élément accumulateur d'énergie est disposé
- entre la charnière (2) et la porte de véhicule (1)
- ou entre la charnière (2) et le châssis (6)
- et/ou entre la plaque filetée et le châssis (6) ou la porte de véhicule (1)
- et/ou entre la tête du boulon (3.1) et la charnière (2).

10. Issue de secours selon les revendications 8 et 9, **caractérisée en ce que** l'élément accumulateur d'énergie est réalisé sous forme de ressort de compression (12.1, 12.2).

11. Issue de secours selon l'une des revendications 8 à 10, **caractérisée en ce que** le boulon fileté (3) traverse la charnière (2) et le châssis (6) du véhicule ou la porte de véhicule (1), la conduite d'amenée (4) vers l'élément explosif (E1, E2 à En) passant par l'extrémité du boulon fileté (3) qui est située en regard de la tête du boulon (3.1).

12. Issue de secours selon l'une des revendications 8 à 11, **caractérisée en ce que** la liaison entre la charnière de porte (2) et le châssis (6) du véhicule et/ou la porte de véhicule (1) est assurée par deux ou plusieurs boulons filetés (3) pourvus d'éléments explosifs (E1, E2 à En).
